# EUROPEAN PATENT SPECIFICATION

(11) **EP 4 190 153 B1**
(45) Date of publication and mention of the grant of the patent: **03.07.2024**
(21) Application number: 21383097.9
(22) Date of filing: 03.12.2021
(51) Int. Cl.: A01M 1/02, A01M 1/20, A01M 31/00

(54) **SYSTEM FOR A SELECTIVE CONTROL OF A POPULATION OF INVERTEBRATES**
SYSTEM ZUR KONTROLLE DER POPULATION VON WIRBELLOSEN TIEREN
SYSTÈME DE CONTRÔLE DE POPULATION DES INVERTÉBRÉS

(43) Date of publication of application: 07.06.2023
(73) Proprietor: Biosfera Consultoría Medioambiental, S.L., 33012 Oviedo (Asturias) (ES); Dimaim Systems S.L., 48940 Leioa (Vizcaya) (ES)
(72) Inventor: De La Lama Pesquera, Jose María, 33012 Oviedo (Asturias) (ES); Fernández García, Eduardo, 33006 Oviedo (Asturias) (ES); Fernández Menéndez, Diego, 33012 Oviedo (Asturias) (ES)
(74) Representative: Clarke, Modet y Cía., S.L.

(56) References cited:
- CN-A- 109 788 747
- US-A1- 2017 105 403

## Description

### FIELD OF THE INVENTION

The invention falls within the techniques for analyzing and controlling a population of invertebrates. Specifically, it relates to traps for capturing, identifying, releasing and/or disposing specific species of invertebrates, mainly flying insects.

The invention may refer among other sectors to the environment and agriculture, for example, for the management of resources, the study of biodiversity or the control of pests and invasive species.

US2017105403A1 discloses a pest control system that allows attraction, interception and elimination of colonies of invertebrates, said system comprising a main box adapted to be mounted to a wall, defining an inner area, having an open front, a partially open back, and sides, top, and bottom surfaces impermeable to light and air flow.

### BACKGROUND OF THE INVENTION

Research on invertebrate organisms, in particular insects, is very useful to know the biodiversity or environmental conditions of a certain area. For example, scientists' study invertebrate populations to gather information of various nature. For example, there are certain species of mosquitoes that are vectors of disease. Also, populations of invertebrates that are invasive species such as the Asian hornet (*Vespa velutina*) can be problematic or, simply, if their number is excessive, they can cause pests that affect crops or habitat, and even the safety and health of people.

Although insect control devices are known in the prior art, it has been observed that they are designed for morphologically similar species, for example, mosquitoes, and for a specific task, for example, disposal. There are few proposals for the study or to control the population. Even less so to be able to perform both tasks.

Currently, there is little flexibility in the functionalities that implement such devices and scarce or no ability to decide what action to take on a captured specimen. It lacks greater versatility to adapt to different invertebrate species easily, even automatically and remotely. The maintenance of known devices is also problematic and is aggravated by being located, generally, in remote areas.

The present invention meets these needs.

### DESCRIPTION OF THE INVENTION

An object of the invention is an apparatus or system for selective control for a population of a specific species of invertebrate with the features of the independent claim. Various particular embodiments are defined in the dependent claims.

Some aspects of the invention are noted below.

The system incorporates a processing means, a compressed air unit, a tank for attractant, a poison dispensing unit, bait, marking, etc., and a tank for storing disposed individuals.

The system also incorporates a capture and identification unit that has a room and connecting means of said room with several areas. The room is designed to be suitable for housing an individual belonging to the species of invertebrate under control, this is a specimen.

The connection with a certain area is produced by displacement of the room itself. It is a dynamic mechanism that avoids depending on the behavior of the captured individual. Operation of the system is not dependent on invertebrates having to move from area to area. These could stand still or turn around. With the room movable between areas, the system itself is responsible for moving the invertebrate to the desired area. Thus, each area can be assigned to a specific task. Tasks are selectable, for example, based on a preset criterion or a command received in the processing media. This gives the system versatility.

A first entrance area allows to connect the room with an external access and with the tank for attractant. The attractant is usually a chemical substance with properties over a certain species of invertebrate. Generally, the chemical substance is related to food or sexual behavior (pheromones). With this, you can choose which species of invertebrates are guided to the room. Optionally, to improve the effectiveness and extend the range, the compressed air unit acts by projecting air very smoothly outwards. This facilitates diffusion of the attractant.

A second simple release area of the captured individuals that connects the room with an external access and with the compressed air unit. By "simple release" is meant release without the intention of giving death. For example, projecting compressed air with an intensity below a maximum threshold, in order to expel the individual smoothly and ensure that it does not suffer damage.

A third instantaneous death area of an individual connecting the room with the tank of disposed individuals and with the compressed air unit. In this case, compressed air is projected with an intensity above a minimum threshold, to instantly cause death. These thresholds are configurable both in number and intensity, such that the invertebrate can be captured, without death, for subsequent studies.

The system is shaped so that the disposal-release unit of individuals can house these three areas. Optionally, it can also harbor more areas. Specifically, in some embodiments it can harbor a fourth delayed death release area. Delayed death release refers to a release of the individual with poison impregnation. For example, to take it to its nest and affect a greater number of individuals, not only the captured one. This is useful to act in the face of an invasive species, ongoing pest or threat of pest, for example.

Either additionally, or alternatively to the fourth area, there may be a modified fifth release area. Similarly, this fifth area also connects the room with the dispensing unit and with the compressed air unit. In contrast, in the modified release, bait and/or marking is applied to the captured individual. With this, the population can be influenced to increase it or simply facilitate the study thereof, also acting on the nest. One of the components of the system is a camera to photograph or record the individual in the room reliably. "Camera" is to be understood as a sensor (or sensors) capable of imaging. To do this, for example, the room can be transparent and the camera external thereto. This also facilitates cleaning and maintenance.

With regard to the means of processing, they are responsible for coordinating the operation of the system. Mainly, they do so as a function of whether there is correspondence between a captured individual and the target invertebrate species. To do this, they work with the information obtained with the camera. For example, they control the capture and identification unit and the disposal-release unit. They control the connecting means and change from the first area to another area depending on whether or not correspondence is determined and on the preset criterion.

To determine if there is correspondence, the processing means is responsible for analyzing the images of the individual captured by the camera. To do this, they implement digital image processing techniques with artificial intelligence algorithms, and/or machine learning. In particular, by a trained neural network with multiple examples of individuals corresponding to the specific species of target invertebrate. It also trains with multiple examples of individuals from other species not corresponding to the specific target invertebrate species. Additionally, it is trained with images of the empty room to recognize defects in the image of the camera, e.g. brightnesses that may falsify the result over a correspondence.

They can also apply filters to improve invertebrate detection and avoid false positives, for example, to remove noise or interference. Various operations can be applied, such as drawing a contour with the captured image of the individual, framing it in a rectangle to indicate the width and height dimensions. This prevents dirt particles from being taken into account.

Sometimes it is helpful to define an operating portion of the room in which the images are considered valid. For example, discarding the principle of the room to avoid analyzing an individual if the same is not completely inside.

The above actions can be combined to improve the hit rate.

Also store locally and/or remotely detection-related information.

It is sometimes desirable to reduce the need for system maintenance. For example, if it is to be placed in a remote or inaccessible location, or if a large number of captures are expected. In such cases, it may be desirable in one embodiment of the system to incorporate a self-cleaning function. If the system includes a tank for cleaning liquid, for example, water and a sixth cleaning area is enabled that connects the room with an external access, as a drain, and with a conduit communicated with the compressed air unit and with the cleaning tank, pressure cleaning liquid can be applied to the room when necessary. The camera can determine when the room is dirty and automatically schedule cleaning thereof, for example, at a time when no activity of the target species is expected. Similarly, it may be desirable in one embodiment of the system to incorporate a recalibration function, since the movement of the passenger room between the areas requires precise movements. An image taken by the camera of the empty room in the entrance area is compared with a reference image (correctly calibrated). If the images are different, at least by a preset percentage, it can be concluded that it is necessary to recalibrate, then the processing means sends an adjustment instruction to the motor to act on the connecting means. The same digital image processing techniques to identify correspondences with that target invertebrate species can be applied to compare with the reference image. Implementing the recalibration function prevents an operator from having to travel to the system location. The recalibration function may be performed periodically or by an instruction received at the communications unit. Powering of the system can be autonomous in some embodiments, for example, via batteries connected with solar panels.

The system may include multiple rooms. One possibility to include them is to design the system in a modular way. Several rooms can be coupled each with their own disposal-release unit and their capture and identification unit, but with the advantage that they can share some elements. For example, the tanks and/or the compressed air unit may be common to several modules. The system can also be designed so that the modules are distributed radially. A greater radius of action is covered.

In a preferred embodiment, the room is a small transparent tube and the connecting means include a rotatable drum to which the room is coupled to communicate with the different areas of the disposal-release unit. A motor drives a mechanism to move the drum. The motor is controlled by the processing means.

### BRIEF DESCRIPTION OF THE DRAWINGS

Figure 1 is a functional block diagram of the invention.
Figures 2A-2D are schematic diagrams of interactions between different elements according to functionalities of an embodiment of the invention.
Figures 3A-3D are views of a possible modular embodiment of the invention.
Figures 4A- 4B are interior views of a possible embodiment of the invention.
Figure 5 is a perspective of a possible embodiment of the invention.

### DESCRIPTION OF EMBODIMENTS

With reference to the above figures, but not limited to, various embodiments of the invention are presented for better understanding.

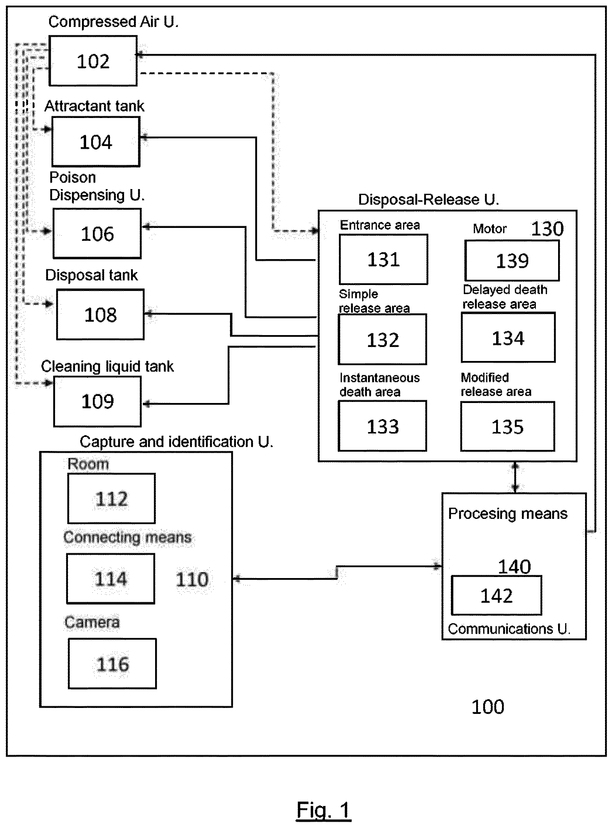

Figure 1 schematically depicts a block diagram to show the functional relationships between different elements of the selective control system 100 of an invertebrate population according to an embodiment. The arrows indicate interaction. Continuous line indicates data transmission (component status, captured individual information, etc.) and/or instructions between components (open valve, expel compressed air, etc.). The dashed-line arrows indicate coupling for the passage of substances (poison, bait, marking) or fluids (air, water) between elements, this is a physical interconnection. For clarity, in Figure 1 the main interconnections and data transmissions are shown but not all possible.

A processing means 140 is responsible for controlling the operation of various units and components. In some embodiments, the processing means 140 may include one or several microprocessors or microcontrollers with storage capacity, ASIC circuits, Arduino boards, Raspberri Pi, etc.

Among the tasks of the processing means 140 is to identify whether an individual is a target specimen. To this end, artificial intelligence techniques are programmed and implemented. For example, through the use of neural networks and machine learning algorithms for image classification and object recognition. The processing means 140 is trained to identify whether images of individuals captured by a camera 116 can be considered as specimens of the invertebrate type under control. The processing means 140 may decide on subsequent actions to be taken to control its population. Specifically, different types of disposal or release can be established. These actions can be pre-programmed, that is, defined according to a previous criterion. There may also be a communications unit 142 to receive instructions remotely and manage what to do. With this same communications unit 142, information may also be sent about the captured individuals or the operation of the system 100 itself. For example, to send information on the number of detections from a given period to an external unit for registration and analysis. For example, to send alerts about whether a tank is full or empty, etc. You can implement wireless technologies such as 3G/4G/5G, wifi, Lora, etc.

In Figure 1 it is shown that the system 100 has a capture and identification unit 110 and a disposal-release unit 130 with which it cooperates. The capture and identification unit **110** has a room **112** and connecting means **114** for communicating said room with a series of areas of the disposal-release unit **130.** Thus, it is chosen what treatment is performed on the captured individual.

Depending on the features of the target specimens, the room 112 is designed. Mainly, the size for the room **112** to have dimensions that allow to house the same. Likewise, with the connecting means **114,** which under the drive of a motor **129** controlled by the processing means **140,** chooses with which area the room 112 communicates **and** what action is performed thereon. Different areas can be defined for different system functions, this is to perform different treatments or actions. Therefore, many are optional or depend on the control to be performed. Generally, it is considered that in addition to an entrance area **131,** there is a simple release area **132** and death area, either an instantaneous death area **133,** delayed death area **134,** and modified release area **135.**

In one of the embodiments, explained in detail below, the connecting means **114** are implemented as a rotatable element with different passages, similar to a revolver drum where the bullet chambers are equivalent to the passages that physically communicate the passenger room with a given area.

Figure 1 also shows a compressed air unit **102** that is in charge of various tasks. To do so, it collaborates and associates with other units and components of the system **100** according to the instructions of the processing means **140.** Some conduits present in the compressed air unit **102** carry air with different pressure levels to expel the captured individual from the system **100,** either violently or gently as desired to remove or release it. To this end, there may be valves that selectively actuate one or the other conduit by opening or closing them.

The valve may be adjustable and include various positions with varying degrees of opening. For example, a first position intended to give instantaneous death temporarily releasing air at a pressure greater than a certain threshold (configurable). A second position intended to expel without harming the individual by temporarily releasing at a pressure lower than another threshold (configurable). The compressed air unit **102** also carries out maintenance tasks alone (blow cleaning) or in coordination with a cleaning liquid tank (spraying or sprinkling cleaning liquid). It may also contribute to improving the capture rate in coordination with an attractant tank **104,** facilitating the diffusion of the attractant in the surroundings.

Figure 1 also shows a dispensing unit **106** that may incorporate one or more tanks of poison, bait, marking dye, etc. or simply a connection thereto to dispense its contents. For example, with a dispensing unit **106,** a substance can be impregnated on the individual himself, either through the compressed air unit **102,** or by applying a substance on a place of passage of the individual, such as the modified release area 135 or the delayed death **area 134.**

System **100** may include a disposal tank **108** for storing individuals disposed by instantaneous death.

A disposal-release unit 130 is provided in the system, **where several areas 131,** 132, **133, 134, 135** may be formed. Each area is preferably used for one function. However, they could be defined to share functions. A camera **116** is installed in the disposal-release **unit 130** that focuses and takes photographs or videos of the individual who has been introduced into the room **112.** This information is received by the processing means **140** that determines whether the captured individual is a specimen of the control target population. The system **100** decides a treatment, for example, a type of disposal or release.

The system **100** may have additional sensors. For example, to measure environmental variables associated with captures. Temperature, atmospheric pressure, humidity, etc. sensors can be installed to record environmental information that relates to the frequency of captures, or to modify the operation of the capture and identification unit or other component of the system **100** (e.g., to vary the illumination, to heat the attractant if the day is cold, to select the death system based on the time of day and/or time of year, to adapt the compressed air unit and to better diffuse the attractant, etc.).

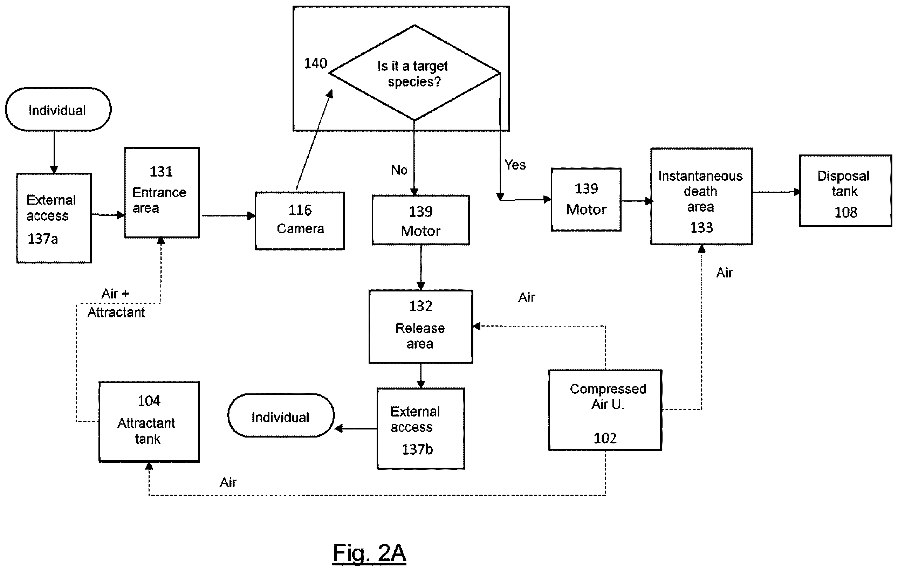

Figures 2A-2C show simplified examples of interactions between elements. The type of lines in the arrows has the same meaning as in the previous figure.

Figure 2A shows the cases of instantaneous death and simple release. The entrance area 131 is observed with an external access **137a** to which air mixed with attractant generated with the compressed air unit **102** and the attractant tank **104 arrives.** Once inside the individual, the motor **139** moves the room so that it moves away from the area. The camera **116** takes images to be processed in the processing means **140** to determine whether it is an individual belonging to the target species, and thereby decide whether the motor **139** should move the position of the room from the entrance area **131** to the instantaneous death area **133.** It is also decided if the compressed air unit **102** is to be used with high pressure to give death thereto and to expel it to the disposal tank **108.** Or, in the absence of positive identification with the target species, the motor **139** moves the room from the entrance area **131** to the simple release area **132** with an external access **137b** and the low-pressure compressed air unit **102** to expel the individual to the outside.

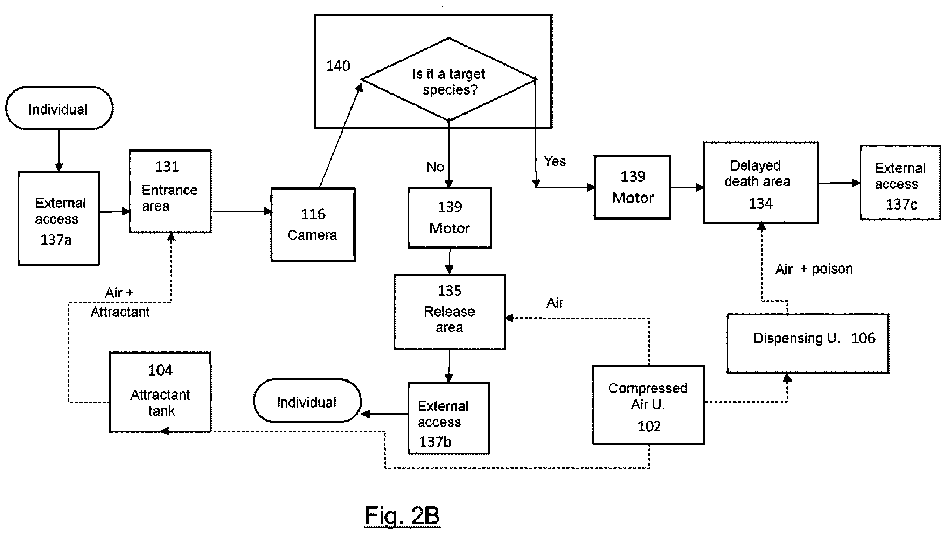

Figure 2B shows the cases of delayed death and modified release. The entrance area 131 is observed with an external access **137a** to which air mixed with attractant generated with the compressed air unit **102** and the attractant tank **104 arrives.** Once inside the individual, the motor **139** moves the room so that it moves away from the area. The camera **116** takes images to be processed in the processing means **140** to determine whether it is an individual belonging to the target species, and thereby decide whether the motor **139** should move the position of the room from the entrance area **131** to the delayed death area **134** where the dispensing unit **106,** in cooperation with the compressed air unit **102,** administers a mixture of air and poison at low pressure to impregnate the individual and expel it to the outside. Or, in the absence of positive identification with the target species, the motor **139** moves the room from the entrance area **131** to the modified release area **132** and the low-pressure compressed air unit **102** to expel it outside.

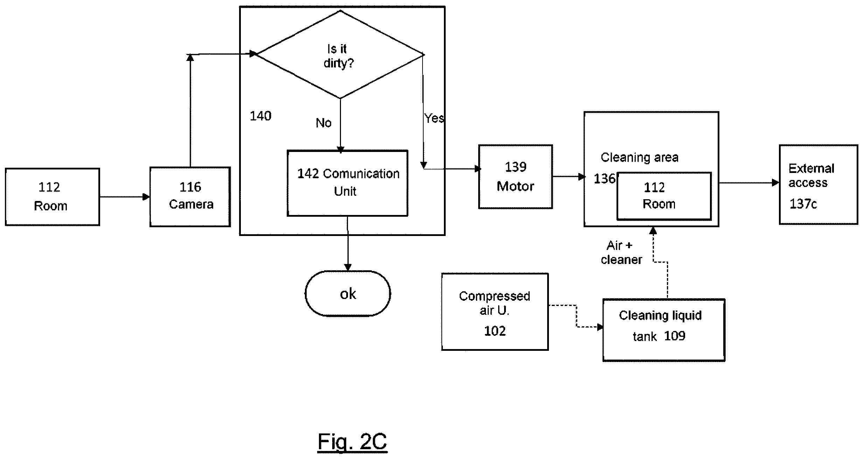

Figure 2C shows the self-cleaning function. An image of the empty room 112 is taken with the camera **116** and processed in the processing means **140** to determine its state. If clean, communications unit **142** may issue a proper operation message. If dirty, the motor **139** moves the room to a cleaning area **136** where is treated. The compressed air unit **102** cooperates with a cleaning liquid tank **109** that stores water or a liquid suitable for cleaning without damaging the components, which is projected or sprayed onto the room **112** that is communicated with the external access **137c** for evacuation. Thereafter, a pressurized air blow may be performed to finish cleaning and/or drying the room **112.**

Also to facilitate maintenance tasks, a recalibration function can be incorporated. In field tests, it has been found that some mechanisms with the use may require adjustments, such as the case of the connecting means. This recalibration function is explained below in connection with one embodiment of the invention.

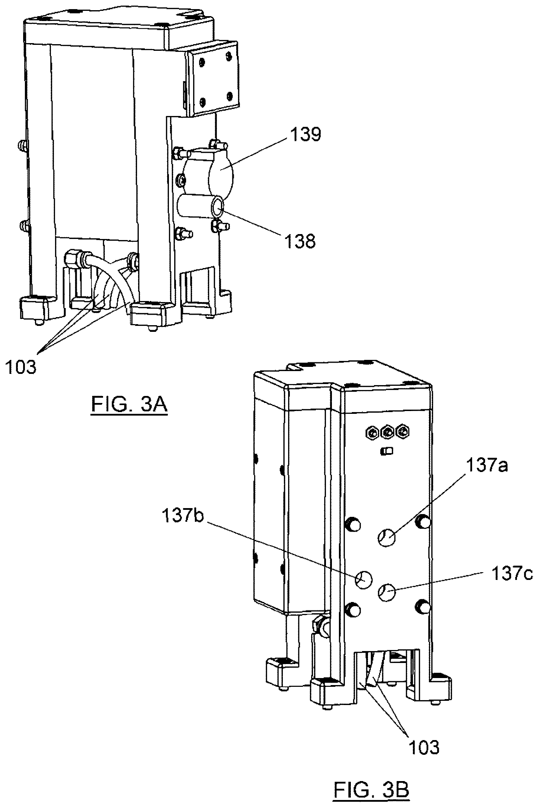

Figures 3a-3d show various aspects of a modular embodiment of the invention.

Figure **3A** **illustrates the design of a side wherein the conduits 103** of the compressed air unit **102,** the motor **139** and a transmission mechanism **138 are** appreciated.

Figure 3B illustrates the design of another side for with three external entrances **137a, 137b, 137c** that communicate the different areas **131-136** with conduits **103.**

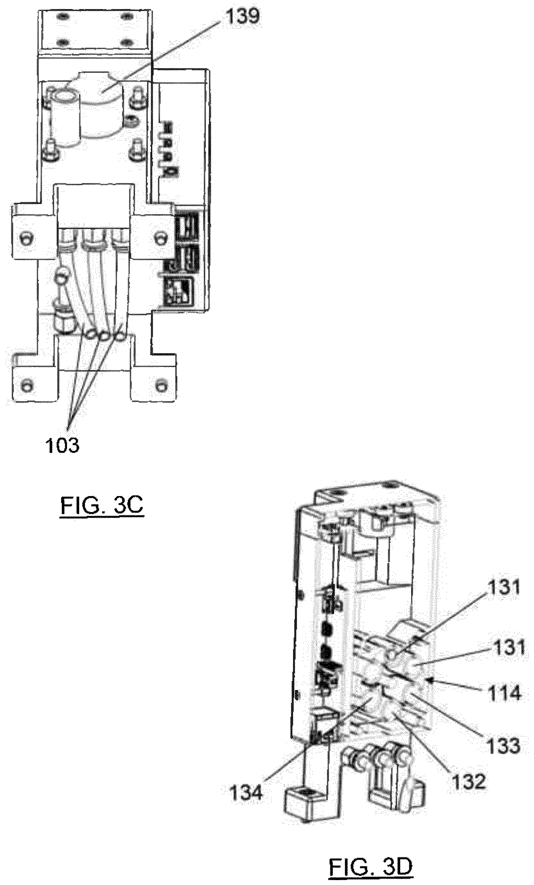

Figure 3C illustrates the design of the bottom with the conduits **103,** the motor **139** and a transmission mechanism **138.**

Figure 3D illustrates a cutout of a module. It illustrates the interior with connecting means **114** that are designed as a rotating drum with several passages that align with the external accesses **137a, 137b, 137c** shown in Figure 3B.

After continued use the alignment of the connecting means may require maintenance. To this end, it is planned to incorporate a recalibration function to correct small misalignments in the position of the drum for the embodiment described in the previous figures. The recalibration function is an iterative process that includes several steps: taking an image with the corresponding camera with the housing in the first entrance area; analyzing it with the processing means by comparing it with a reference image showing the correctly located components; sending to the motor an adjustment instruction to rotate the drum a predetermined amount, if it is determined that it requires adjustment because both images differ by at least a preset percentage; taking a new image and comparing again with the reference image. If it is determined that the images differ more than previously, it can be inferred that the image must be rotated in the opposite direction, for which the previous rotation is undone (returning to the initial state) and the preset amount is also rotated in the opposite direction. If the images differ less than previously but more than the preset percentage, an adjustment instruction is sent back to the motor. If they already differ less than the preset percentage, the recalibration is finished. To avoid, for other reasons, entering a loop, the recalibration may be finished if after turns with several predetermined amounts and in both directions, a comparison that differs less than what is predetermined is not achieved. In such a case, the processing means may send an alarm message to the remote unit.

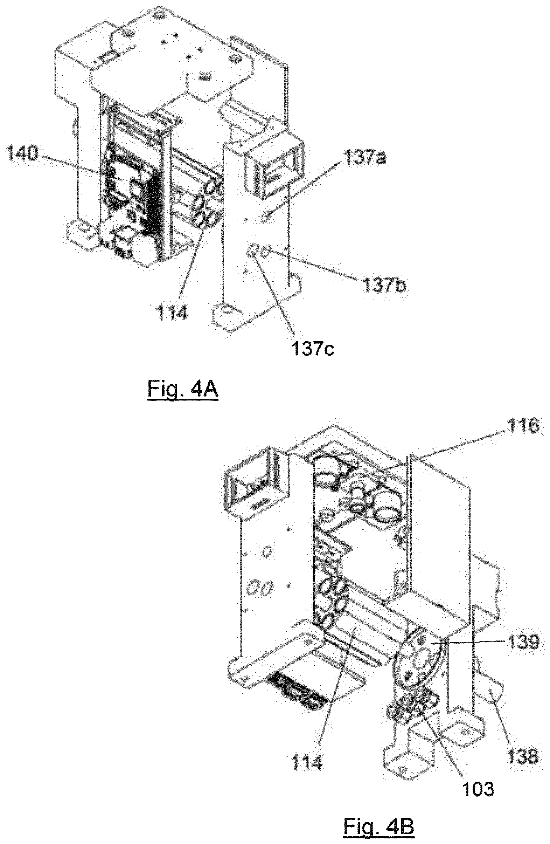

Figures 4A- 4B are different views of an exploded view of a possible embodiment of the invention.

In Figure 4A are appreciated the processing means **140** made as a control board arranged next to the connecting means **114** made as a drum of six chambers.

In Figure 4B the motor 139 is appreciated in its coupling with the connecting means **114** and the transmission mechanism **138.** The inlets/outlets of conduits 103 are also observed.

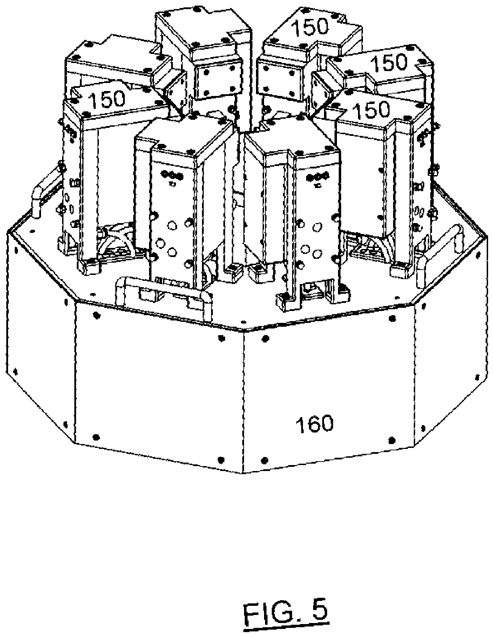

Figure 5 illustrates a possible embodiment of the invention as a modular system. It can be seen how eight modules **150** are distributed radially. Coupled with the different modules **150** at the bottom there is a common compartment **160** where the common elements are housed. For example, modules may share disposal tank, attractant, poison, bait, cleaning liquid, or compressed air unit. In some embodiments implementing stand-alone power, it may contain a battery coupled with solar panels (installed at the top, as a roof). Additionally or alternatively, in other embodiments it may operate plugged directly into electric power system.

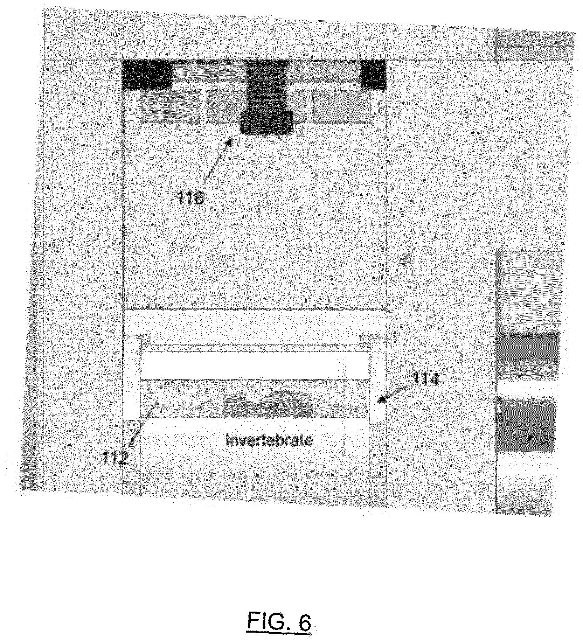

Figure 6 illustrates in greater detail the position of the camera **116** with respect to the connecting means **114** and the room **112** (in the entrance area) after capturing an individual.

The camera **116** is preferably infrared, enabling detection in a dark environment, avoiding brightness and luminosity changes that may affect a correct detection. Other steps that may be taken to improve detection include the room **112** where the individual's image is captured being isolated from sunlight, the background being uniformly colored to highlight the invertebrate. For example, make it white, if the target invertebrate is dark in color. The location of the camera **116** must be chosen so that all or at least most of the room **112** to contain a captured individual is covered. By being able to arrange the camera outside the room **112,** it is easier to meet this condition. This location may best be appreciated in the following figures. In turn, it allows the installation in the system of a larger room **112,** which is suitable for housing invertebrate species of various sizes.

As an example, a specific embodiment of the system is provided for the control of the Velutina hornet. This hornet has many similarities with other native hornets of the Iberian peninsula, such as the Cabro hornet. In addition to considering the dimensions of the room to suit the size of this species, the processing means implement an artificial intelligence algorithm that has been trained to detect and identify the same. One of the differences with other species is in size. Another difference is in the abdomen, in the Velutina hornet it is yellow in the last segment, instead, in the Cabro hornet it is more extensive. Another difference is in the legs, in the Velutina they are black with yellow ends, while in the Cabro hornet they are more orange and homogeneous along the leg. The head and the rest of the body of the Velutina is generally darker than the Cabro hornet. However, this difference is minimal in many specimens. The algorithm may include contour detection techniques further to determine the particular size and dimensions. In general, an algorithm should focus on analyzing those distinctive areas that are characteristic of the target specimen. Reliable identification can thus be established.

### GLOSSARY OF NUMERICAL REFERENCES

100 System.
102 Compressed air unit.
103 Conduits.
104 Attractant tank.
106 Poison dispensing unit.
108 Disposal tank.
109 Cleaning fluid tank.
110 Capture and identification unit.
112 Room.
114 Connecting means.
116 Camera.
130 Disposal-release unit.
131 Entrance area.
132 Simple release area.
133 Instantaneous death area.
134 Delayed death release area.
135 Modified release area.
136 Cleaning area.
137A External access.
137b External access.
137c External Access
138 Transmission Mechanism.
139 Motor.
140 Processing means.
142 Communications unit.
150 Module.
160 Common compartment.

## Claims

1. A selective control system for a population of invertebrates comprising:
a compressed air unit (102);
an attractant tank (104);
a poison dispensing unit (106);
a disposal tank (108) for storing disposed individuals;
a capture and identification unit (110) for capturing and identifying individuals comprising:
a room (112) for housing an individual from the invertebrate population;
connecting means (114) of said room with a plurality of areas (131-135);
a camera (116) for taking at least one image of the individual in the room (112);
an disposal-release unit (130) comprising:
a first area (131) for entrance of an individual, where the first area (122) allows the camera to take images, and connects the room (112) with an external access (137a) and with the attractant tank (104);
a second area (132) for simple release of an individual, where the second area (132) connects the room (112) with an external access (137b) and with the compressed air unit (102);
a third area (133) for instantaneous death of an individual, wherein the third area (133) connects the room (112) with the disposal tank (108) and with the compressed air unit (102);
a processing means (140) associated with the capture and identification unit (110) and with the disposal-release unit (130), wherein the processing means (140) is programmed to analyze the image of the individual taken by the capture and identification unit (110) by applying trained artificial intelligence algorithms to determine whether there is correspondence with an invertebrate specimen and establish a detection, wherein the processing means (140) is programmed to store detection-related information, and to control the connecting means (114) and change from the first area (131) to a different area selectable between at least the second area (132) and the third area (133).

2. The system according to claim 1, wherein the disposal-release unit (120) further comprises a fourth area (134) for modified release of an individual, where the fourth area connects the room with the dispensing unit (106) with poison and with the compressed air unit (102), to impregnate the individual with poison;
wherein the processing means 140, based on initial operating instructions, controls the connecting means 114 and changes from the first area 132 to the fourth area if it establishes a detection.

3. The system according to claim 1 or 2, further comprising:
a dispensing unit (106) for bait and/or for marking;
wherein the disposal-release unit (130) further comprises a fifth area (135) for modified release of an individual, wherein the fifth area (135) connects the room (112) with the dispensing unit (106) and with the compressed air unit (102), such that bait and/or marking is applied to the individual;
wherein the processing means 140, based on a predetermined criterion or operating instructions, controls the connecting means 114 and changes from the first area 132 to the fifth area 135 if it establishes a detection.

4. The system according to any one of the preceding claims, further comprising:
a cleaning liquid tank (109) for implementing a self-cleaning function;
wherein the disposal-release unit (130) further comprises a sixth area (136) of cleaning, wherein the sixth area (136) connects the room (112) with an outer access (137c) and with a conduit (103) connecting with the compressed air unit (102) and with the cleaning liquid tank (109) for spraying or applying pressurized cleaning liquid in the room (112).

5. The system according to claim 4, wherein the camera (116) takes an image of the empty room (112) and the processing means (140) analyzes said image to determine if it is dirty and perform the self-cleaning function.

6. The system according to any one of the preceding claims, wherein the compressed air unit (102) comprises an adjustable valve with at least two opening positions, a first position for temporarily releasing pressurized air above a first threshold, or a second position below a second threshold.

7. The system according to claim 6, wherein the first threshold and the second threshold depend on the control target invertebrate specimen.

8. The system according to any one of the preceding claims, further comprising a communications unit (142) associated with the processing means (140) for transmitting detection-related information to an external unit.

9. The system according to claim 8, wherein the communications unit (142) is associated with the processing means (140) for receiving operating instructions.

10. The system according to any one of the claims wherein, in order to implement a recalibration function, the processing means (140) analyzes an image taken by the camera (116) of the empty room (112) in the entrance area (131) and compares said image with a reference image, if after comparing them differ by more than a preset percentage, the processing means (140) sends an adjustment instruction to a motor (139) to act on the connecting means (114) and, orders the camera (116) to take a new image of the empty room (112) in the entrance area (131) to compare it with the reference image and check if they differ less than before acting on the connecting means (114).

11. The system according to any one of the preceding claims, wherein the areas (131-136) of the disposal-release unit (130) are distributed longitudinally on a rotating drum under the action of the motor (139) controlled by the processing means (140).

12. The system according to any one of the preceding claims, comprising a plurality of disposal-release units (130) and capture and identification units (110) sharing one or more tanks and/or the compressed air unit (102).

13. The system according to any one of the preceding claims, further comprising electric power means through batteries and solar panels.

14. The system according to any one of the preceding claims, further comprising a temperature sensor and/or a humidity sensor for recording environmental information, which is analyzed by the processing means (140) to act on the capture and identification unit and/or on the compressed air unit.

15. The system according to any one of the preceding claims, wherein the system is modular with a plurality of modules, wherein each module comprises a disposal-release unit (130) and a capture and identification unit (110), wherein, at least the compressed air unit (102), the attractant tank (104) and the disposal tank (108) are common to the plurality of modules.

## Patentansprüche

1. Selektives Kontrollsystem für eine Population von Wirbellosen, umfassend:
eine Drucklufteinheit (102);
einen Lockstofftank (104);
eine Giftabgabeeinheit (106);
einen Entsorgungstank (108) zur Lagerung entsorgter Individuen;
eine Fang- und Identifizierungseinheit (110) zum Fangen und Identifizieren von Individuen, umfassend:
einen Raum (112) zur Aufnahme eines Individuums aus der Wirbellosenpopulation;
Verbindungsmittel (114) des Raums mit einer Vielzahl von Flächen (131-135);
eine Kamera (116) zum Erfassen mindestens eines Bildes des Individuums in dem Raum (112);
eine Entsorgungs-Freigabeeinheit (130), umfassend:
eine erste Fläche (131) für den Eintritt eines Individuums, wobei die erste Fläche (122) der Kamera erlaubt, Bilder zu erfassen, und den Raum (112) mit einem externen Zugang (137a) und mit dem Lockstofftank (104) verbindet;
eine zweite Fläche (132) zur einfachen Freigabe eines Individuums, wobei die zweite Fläche (132) den Raum (112) mit einem externen Zugang (137b) und mit der Drucklufteinheit (102) verbindet;
eine dritte Fläche (133) für den sofortigen Tod eines Individuums, wobei die dritte Fläche (133) den Raum (112) mit dem Entsorgungstank (108) und mit der Drucklufteinheit (102) verbindet;
ein Verarbeitungsmittel (140), das mit der Fang- und Identifizierungseinheit (110) und mit der Entsorgungs-Freigabeeinheit (130) assoziiert ist, wobei das Verarbeitungsmittel (140) dazu programmiert ist, das von der Fang- und
Identifizierungseinheit (110) erfasste Bild des Individuums zu analysieren, indem trainierte Künstliche-Intelligenz-Algorithmen angelegt werden, um zu bestimmen,
ob eine Übereinstimmung mit einem Wirbellosenexemplar vorliegt, und eine Erkennung zu etablieren, wobei das Verarbeitungsmittel (140) dazu programmiert ist, erkennungsbezogene Informationen zu speichern und das Verbindungsmittel (114) zu kontrollieren und von der ersten Fläche (131) zu einer unterschiedlichen Fläche zu wechseln, die zwischen mindestens der zweiten Fläche (132) und der dritten Fläche (133) auswählbar ist.

2. System nach Anspruch 1, wobei die Entsorgungs-Freigabeeinheit (120) ferner eine vierte Fläche (134) zur modifizierten Freigabe eines Individuums umfasst, wo die vierte Fläche den Raum mit der Abgabeeinheit (106) mit Gift und mit der Drucklufteinheit (102) verbindet, um das Individuum mit Gift zu imprägnieren;
wobei das Verarbeitungsmittel 140 basierend auf anfänglichen Arbeitsanweisungen das Verbindungsmittel 114 kontrolliert und von der ersten Fläche 132 zur vierten Fläche wechselt, wenn es eine Erkennung etabliert.

3. System nach Anspruch 1 oder 2, ferner umfassend:
eine Abgabeeinheit (106) für Köder und/oder für Markierung;
wobei die Entsorgungs-Freigabeeinheit (130) ferner eine fünfte Fläche (135) zur modifizierten Freigabe eines Individuums umfasst, wobei die fünfte Fläche (135) den Raum (112) mit der Abgabeeinheit (106) und mit der Drucklufteinheit (102) verbindet, derart, dass ein Köder und/oder eine Markierung an dem Individuum aufgebracht wird;
wobei das Verarbeitungsmittel 140 basierend auf einem vorbestimmten Kriterium oder Arbeitsanweisungen das Verbindungsmittel 114 kontrolliert und von der ersten Fläche 132 zur fünften Fläche 135 wechselt, wenn es eine Erkennung etabliert.

4. System nach einem der vorhergehenden Ansprüche, ferner umfassend:
einen Reinigungsflüssigkeitstank (109) zum Implementieren einer Selbstreinigungsfunktion;
wobei die Entsorgungs-Freigabeeinheit (130) ferner eine sechste Fläche (136) zum Reinigen umfasst, wobei die sechste Fläche (136) den Raum (112) mit einem äußeren Zugang (137c) und mit einer Leitung (103) verbindet, die mit der Drucklufteinheit (102) und mit dem Reinigungsflüssigkeitstank (109) zum Versprühen oder Aufbringen von unter Druck stehender Reinigungsflüssigkeit in dem Raum (112) verbunden ist.

5. System nach Anspruch 4, wobei die Kamera (116) ein Bild des leeren Raums (112) erfasst und das Verarbeitungsmittel (140) das Bild analysiert, um zu bestimmen, ob er verschmutzt ist, und die Selbstreinigungsfunktion durchzuführen.

6. System nach einem der vorhergehenden Ansprüche, wobei die Drucklufteinheit (102) ein einstellbares Ventil mit mindestens zwei Öffnungspositionen umfasst, eine erste Position zum vorübergehenden Freigeben von Druckluft oberhalb eines ersten Schwellenwertes oder eine zweite Position unterhalb eines zweiten Schwellenwertes.

7. System nach Anspruch 6, wobei der erste Schwellenwert und der zweite Schwellenwert von dem Kontrollziel-Wirbellosenexemplar abhängen.

8. System nach einem der vorhergehenden Ansprüche, ferner umfassend eine Kommunikationseinheit (142), die mit dem Verarbeitungsmittel (140) assoziiert ist, um erkennungsbezogene Informationen an eine externe Einheit zu übertragen.

9. System nach Anspruch 8, wobei die Kommunikationseinheit (142) mit dem Verarbeitungsmittel (140) zum Empfangen von Arbeitsanweisungen assoziiert ist.

10. System nach einem der Ansprüche, wobei das Verarbeitungsmittel (140) zwecks Implementieren einer Rekalibrierungsfunktion ein von der Kamera (116) erfasstes Bild des leeren Raums (112) in der Eintrittsfläche (131) analysiert und das Bild mit einem Referenzbild vergleicht, falls sie sich nach dem Vergleich um mehr als einen vorab festgelegten Prozentsatz unterscheiden, das Verarbeitungsmittel (140) eine Anpassungsanweisung an einen Motor (139) sendet, um auf das Verbindungsmittel (114) einzuwirken, und die Kamera (116) anweist, ein neues Bild des leeren Raums (112) in der Eintrittsfläche (131) zu erfassen, um es mit dem Referenzbild zu vergleichen und zu überprüfen, ob sie sich weniger unterscheiden als vor dem Einwirken auf das Verbindungsmittel (114).

11. System nach einem der vorhergehenden Ansprüche, wobei die Flächen (131-136) der Entsorgungs-Freigabeeinheit (130) in Längsrichtung auf einer rotierenden Trommel unter der Einwirkung des von dem Verarbeitungsmittel (140) kontrollierten Motors (139) verteilt sind.

12. System nach einem der vorhergehenden Ansprüche, umfassend eine Vielzahl von Entsorgungs-Freigabeeinheiten (130) und Fang- und Identifizierungseinheiten (110), die sich einen oder mehrere Tanks und/oder die Drucklufteinheit (102) teilen.

13. System nach einem der vorhergehenden Ansprüche, ferner umfassend Mittel für elektrischen Strom durch Batterien und Solarzellen.

14. System nach einem der vorhergehenden Ansprüche, ferner umfassend einen Temperatursensor und/oder einen Feuchtigkeitssensor zur Aufzeichnung von Umgebungsinformationen, die von dem Verarbeitungsmittel (140) analysiert werden, um auf die Fang- und Identifizierungseinheit und/oder auf die Drucklufteinheit einzuwirken.

15. System nach einem der vorhergehenden Ansprüche, wobei das System modular mit einer Vielzahl von Modulen ist, wobei jedes Modul eine Entsorgungs-Freigabeeinheit (130) und eine Fang- und Identifizierungseinheit (110) umfasst, wobei mindestens die Drucklufteinheit (102), der Lockstofftank (104) und der Entsorgungstank (108) der Vielzahl von Modulen gemeinsam sind.

## Revendications

1. Un système de contrôle sélectif pour une population d'invertébrés comprenant :
une unité d'air comprimé (102) ;
un réservoir d'attractivité (104) ;
une unité de distribution de poison (106) ;
un réservoir d'élimination (108) pour stocker les individus éliminés ;
une unité de capture et d'identification (110) pour la capture et l'identification d'individus comprenant :
une chambre (112) pour héberger un individu de la population d'invertébrés ;
les moyens de liaison (114) de ladite pièce avec une pluralité de zones (131-135) ;
un appareil photo (116) pour prendre au moins une image de l'individu dans la pièce (112) ;
une unité d'élimination et de libération (130) comprenant :
une première zone (131) pour l'entrée d'un individu, où la première zone (122) permet à la caméra de prendre des images, et relie la pièce (112) à un accès extérieur (137a) et au réservoir d'attractif (104) ;
une deuxième zone (132) pour la libération simple d'un individu, où la deuxième zone (132) relie la pièce (112) à un accès extérieur (137b) et à l'unité d'air comprimé (102) ;
une troisième zone (133) pour la mort instantanée d'un individu, dans laquelle la troisième zone (133) relie la pièce (112) au réservoir d'élimination (108) et
à l'unité d'air comprimé (102) ;
un moyen de traitement (140) associé à l'unité de capture et d'identification (110) et à l'unité d'élimination et de libération (130), dans lequel le moyen de traitement (140) est programmé pour analyser l'image de l'individu prise par l'unité de capture et d'identification (110) en appliquant des algorithmes d'intelligence artificielle entraînés pour déterminer s'il existe une correspondance avec un spécimen d'invertébré et établir une détection, le moyen de traitement (140) est programmé pour stocker les informations relatives à la détection et pour commander le moyen de connexion (114) et passer de la première zone (131) à une zone différente pouvant être sélectionnée entre au moins la deuxième zone (132) et la troisième zone (133).

2. Système selon la revendication 1, dans lequel l'unité d'élimination et de libération (120) comprend en outre une quatrième zone (134) pour la libération modifiée d'un individu, la quatrième zone reliant la pièce à l'unité de distribution (106) de poison et à l'unité d'air comprimé (102), afin d'imprégner l'individu de poison ;
dans lequel le moyen de traitement 140, sur la base des instructions opérationnelles initiales, contrôle le moyen de connexion 114 et passe de la première zone 132 à la quatrième zone s'il établit une détection.

3. Système selon les revendications 1 ou 2, comprenant en outre :
une unité de distribution (106) pour l'appât et/ou le marquage ;
dans laquelle l'unité d'élimination et de libération (130) comprend en outre une cinquième zone (135) pour la libération modifiée d'un individu, la cinquième zone (135) reliant la pièce (112) à l'unité de distribution (106) et à l'unité d'air comprimé (102), de sorte que l'appât et/ou le marquage sont appliqués à l'individu ;
dans laquelle le moyen de traitement 140, sur la base d'un critère prédéterminé ou d'instructions de fonctionnement, contrôle le moyen de connexion 114 et
passe de la première zone 132 à la cinquième zone 135 s'il établit une détection.

4. Système selon l'une quelconque des revendications précédentes, comprenant en outre :
un réservoir de liquide de nettoyage (109) pour la mise en oeuvre d'une fonction d'auto-nettoyage ;
dans lequel l'unité d'élimination et de libération (130) comprend en outre une sixième zone (136) de nettoyage, dans laquelle la sixième zone (136) relie la pièce (112) à un accès extérieur (137c) et à un conduit (103) relié à l'unité d'air comprimé (102) et au réservoir de liquide de nettoyage (109) pour pulvériser ou appliquer un liquide de nettoyage sous pression dans la pièce (112).

5. Système selon la revendication 4, dans lequel la caméra (116) prend une image de la pièce vide (112) et le moyen de traitement (140) analyse cette image pour déterminer si elle est sale et pour exécuter la fonction d'autonettoyage.

6. Système selon l'une quelconque des revendications précédentes, dans lequel l'unité d'air comprimé (102) comprend une vanne réglable avec au moins deux positions d'ouverture, une première position pour libérer temporairement l'air pressurisé au-dessus d'un premier seuil, ou une seconde position en dessous d'un second seuil.

7. Système selon la revendication 6, dans lequel le premier seuil et le second seuil dépendent du spécimen d'invertébré cible de contrôle.

8. Système selon l'une quelconque des revendications précédentes, comprenant en outre une unité de communication (142) associée aux moyens de traitement (140) pour transmettre des informations relatives à la détection à une unité externe.

9. Système selon la revendication 8, dans lequel l'unité de communication (142) est associée au moyen de traitement (140) pour recevoir des instructions de fonctionnement.

10. Système selon l'une quelconque des revendications dans lequel, pour mettre en oeuvre une fonction de recalibrage, le moyen de traitement (140) analyse une image prise par la caméra (116) de la pièce vide (112) dans la zone d'entrée (131) et compare cette image avec une image de référence, si, après comparaison, elles diffèrent de plus d'un pourcentage prédéfini, le moyen de traitement (140) envoie une instruction de réglage à un moteur (139) pour agir sur le moyen de liaison (114) et ordonne à la caméra (116) de prendre une nouvelle image de la pièce vide (112) dans la zone d'entrée (131) pour la comparer à l'image de référence et vérifier si elles diffèrent moins qu'avant d'agir sur le moyen de liaison (114).

11. Système selon l'une quelconque des revendications précédentes, dans lequel les zones (131-136) de l'unité d'élimination et de libération (130) sont réparties longitudinalement sur un tambour rotatif sous l'action du moteur (139) commandé par le moyen de traitement (140).

12. Le système selon l'une quelconque des revendications précédentes, comprenant une pluralité d'unités d'élimination et de libération (130) et d'unités de capture et d'identification (110) partageant un ou plusieurs réservoirs et/ou l'unité d'air comprimé (102).

13. Système selon l'une quelconque des revendications précédentes, comprenant en outre des moyens d'alimentation électrique par le biais de batteries et de panneaux solaires.

14. Système selon l'une quelconque des revendications précédentes, comprenant en outre un capteur de température et/ou un capteur d'humidité pour enregistrer des informations environnementales, qui sont analysées par les moyens de traitement (140) pour agir sur l'unité de capture et d'identification et/ou sur l'unité d'air comprimé.

15. Le système selon l'une des revendications précédentes, dans lequel le système est modulaire avec plusieurs modules, dans lequel chaque module comprend une unité d'élimination et de libération (130) et une unité de capture et d'identification (110), dans lequel au moins l'unité d'air comprimé (102), le réservoir d'attractif (104) et le réservoir d'élimination (108) sont communs à la pluralité de modules.
